# EUROPÄISCHE PATENTSCHRIFT

(11) **EP 0 826 263 B1**
(45) Veröffentlichungstag und Bekanntmachung des Hinweises auf die Patenterteilung: **15.09.1999**
(21) Anmeldenummer: 96914061.5
(22) Anmeldetag: 09.05.1996
(51) Int. Cl.: H02K 5/24

(54) **GERÄUSCHARMER ELEKTROMOTOR, INSBESONDERE KOMMUTATORMOTOR**
LOW-NOISE ELECTRIC MOTOR, ESPECIALLY COMMUTATOR MOTOR
MOTEUR ELECTRIQUE SILENCIEUX, NOTAMMENT MOTEUR ELECTRIQUE A COLLECTEUR

(30) Priorität: 19.05.1995 DE 29508398 U; 27.07.1995 DE 29512144 U
(43) Veröffentlichungstag der Anmeldung: 04.03.1998
(73) Patentinhaber: SIEMENS AKTIENGESELLSCHAFT, 80333 München (DE)
(72) Erfinder: DREXLMAIER, Thomas, D-97076 Würzburg (DE); GÖB, Werner, D-97273 Kürnach (DE); KRÄMER, Ralf, D-97256 Geroldshausen (DE); PIECZKOWSKI, Peter, D-97076 Würzburg (DE); ROHM, Hans, D-97076 Würzburg (DE); RÖCHNER, Burkard, D-97076 Würzburg (DE)
(86) Internationale Anmeldenummer: DE9600805
(87) Internationale Veröffentlichungsnummer: WO9637032

(56) Entgegenhaltungen:
- DE-A- 1 575 635
- DE-A- 2 416 463
- DE-A- 3 830 386
- DE-B- 1 181 307
- DE-B- 1 280 385

## Beschreibung

Die Erfindung bezieht sich auf einen geräuscharmen Kommutatormotor gemäß Patentanspruch 1.

Durch die DE-A-12 80 385 ist eine elektrische Maschine, insbesondere ein Gleichstromkleinstmotor, bekannt, bei der ein Bürstenträger an einem Haltestück befestigt ist, welches unmittelbar anliegend zwischen einem Lagerkörper der Rotorwelle und einem großvolumigen, insbesondere radial dicken, geräuschdämpfenden Zwischenteil angebracht ist, das seinerseits an seiner dem Haltestück abgewandten Seite am Motorgehäuse anliegt.

Durch die DE-A1-37 07 600 ist bei einer bekannten Lagerung einer Motorwelle eines Pumpenantriebes zur Dämpfung der Schwingungen der Motorwelle vorgesehen, die Lager jeweils in einem Lagerhalter aus elastischem Material anzuordnen, um dadurch Schwingungen der Motorwelle zu dämpfen. Die Lagerhalter für das im bekannten Fall vorgesehene Zylinderlager sind dabei als elastische Ringkörper ausgebildet, welche innenseitig jeweils das Lager tragen und außenumfangsseitig von einer das Motorgehäuse nach außen hin abschließenden Stirnwand umfaßt sind.

Durch die DE-A1-15 75 635 ist es bei einer Lageranordnung, insbesondere für elektrische Maschinen, bekannt, zur leichten Abänderung variabler Resonanzfrequenzen zwischen einer Lagerschale und einem Lagerschild ein oder mehrere austauschbare, eine Gummifeder enthaltende Zwischenteile mit unterschiedlicher Federcharakteristik einzusetzen.

Der Erfindung liegt die Aufgabe zugrunde, bei einem Kommutatormotor trotz einfachster, für die Fertigung eines Massenproduktes geeigneter Weise die Übertragung rotorseitiger Geräusche auf den Stator bzw. das Motorgehäuse und damit auf das den Motor aufnehmende Bauteil, insbesondere ein Lüfteraggregat, vermeiden zu können. Die Lösung dieser Aufgabe gelingt durch die Lehre des Anspruches 1; vorteilhafte Ausgestaltungen der Erfindung sind jeweils Gegenstand der Unteransprüche.

Die erfindungsgemäße Lösung erlaubt in vorteilhafter Weise die Verwendung handelsüblicher Lager bei montagetechnisch einfacher statorseitiger Aufnahme dieser Lager, insbesondere Kalottenlager, und bei wegen der in größerem radialen Abstand zu diesen Lagern angeordneten Geräusch-Dämpfungsteile maximaler Dämpfung auch der Bürsten-Kommutatorgeräusche ohne Gefahr von zu großen Fluchtungsfehlern aufgrund der aus einem Elastomer vorgefertigten, gegebenenfalls mit stärkeren Toleranzen behafteten, Geräusch-Dämpfungsteile; die Geräusch-Dämpfungsteile sind entgegen einer lagernahen Anordnung weniger wärmebelastet und können in auch für eine große Steifigkeit der gesamten Lagerhalterung vorteilhaften Weise großflächig ausgebildet werden, wobei durch die Zweiteilung der gegenseitig über die Dämpfungszwischenlage miteinander verbundenen Lagerbügelteile auch das Eigenschwingverhalten der Lagerbügel in geräuschmindernder Weise günstig beeinflußt werden kann.

Die Erfindung sowie weitere vorteilhafte Ausgestaltungen der Erfindung gemäß Merkmalen der Unteransprüche werden im folgenden anhand in der Zeichnung schematisch dargestellter Ausführungsbeispiele näher erläutert; darin zeigen:
- FIG 1: in einem axialen Schnittbild einen Kommutatormotor mit beidstirnseitig zwischen Lagerbügelteilen angeordnetem Geräusch-Dämpfungsteil;
- FIG 2: in einem axialen Schnittbild eine hinsichtlich einer fluchtenden Ausrichtung von Rotor zu Stator fertigungs- und montagetechnisch besonders vorteilhafte Weiterbildung der geräuschgedämpften Lagerung gemäß FIG 1;
- FIG 3: in einem vergrößerten Ausschnitt aus Fig. 2 die Befestigung des zweiten lagerseitigen Lagerbügelteils am Motorgehäuse des Kommutatormotors;
- FIG 4: die stirnseitige Draufsicht auf den linken am Motorgehäuse befestigten Lagerbügel gemäß Fig. 2
- FIG 5: in perspektivischer Darstellung die Befestigung der linken Lagerbügelteile aus Fig. 4

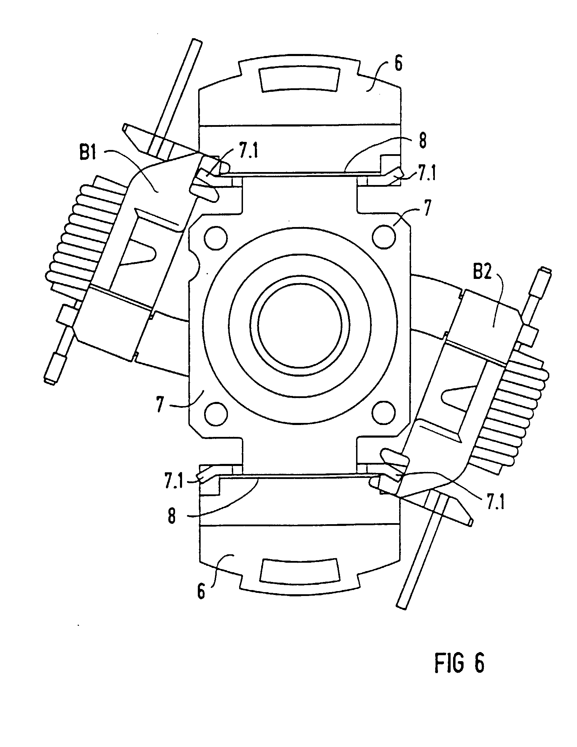

- FIG 6: die axial stirnseitige Draufsicht auf einen kommutatorseitigen Lagerbügel gemäß FIG 1 mit an diesem schwenkbar gelagerten Hammerbürstenhaltern.

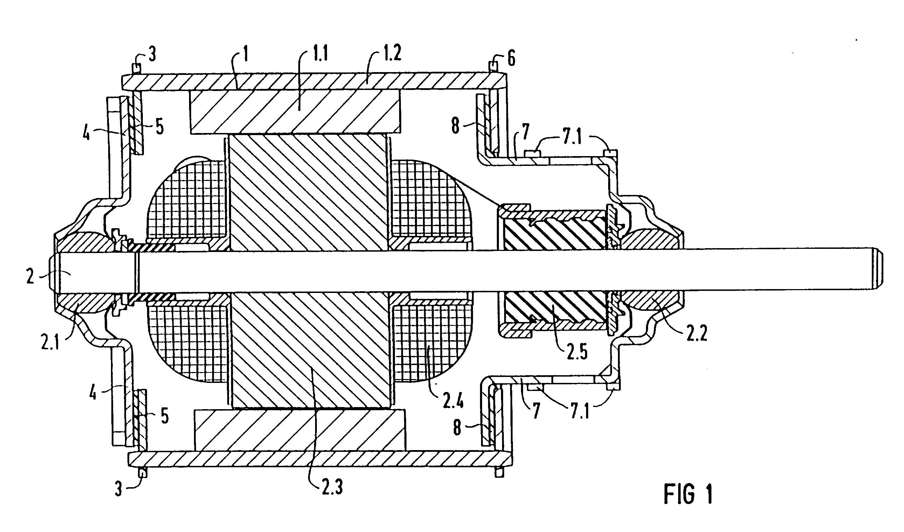

FIG 1 zeigt einen Kommutatormotor mit einem Stator 1 mit einem Motorgehäuse 1.2, an dessen Innenumfang Permanent-Erregermagnete 1.1 gehalten sind, und mit einer in beidseitigen Kalottenlagern 2.1 bzw.2.2 gelagerten Rotorwelle 2, auf der ein Rotorpaket 2.3 mit einer Rotorwicklung 2.4 gehalten ist, die an einen Kommutator 2.5 angeschlossen ist.

Zur Halterung der Kalottenlager 2.1 bzw.2.2 sind an beiden Stirnseiten des Motorgehäuses 1 Lagerbügel vorgesehen, die erfindungsgemäß aus jeweils einem ersten statorseitigen Lagerbügelteil 3 bzw.6 und einem zweiten lagerseitigen Lagerbügelteil 4 bzw.7 unter jeweiliger Zwischenlage eines Gerausch-Dämpfungsteils 5 bzw.8 miteinander verbunden sind; dazu übergreifen sich der jeweils erste statorseitige Lagerbügelteil und der jeweils zweite lagerseitige Lagerbügelteil mit einem vorzugsweise flächigen gegenseitigen Anlageteil, zwischen denen das ebenfalls im wesentlichen flächige Geräusch-Dämpfungsteil 5 bzw.8 derart angeordnet ist, daß sämtliche zur Befestigung bzw. gegenseitigen Abstützung dienenden Teile des ersten statorseitigen Lagerbügelteils 3 bzw.6 bzw. des zweiten lagerseitigen Lagerbügelteils 4 bzw.7 nur unter Zwischenlage des Geräusch-Dämpfungsteils 5 bzw.8 miteinander verbunden sind. Die Geräusch-Dämpfungsteile 5 bzw.8 bestehen bevorzugt entweder aus Kunststoff oder aus Metall.

Gemäß Ausführungsbeispiel nach FIG 1 ist das Geräusch-Dämpfungsteil 8 im wesentlichen radial flächig zwischen entsprechend flächigen Anlageteilen der Lagerbügelteile 6;8 anliegend befestigt.

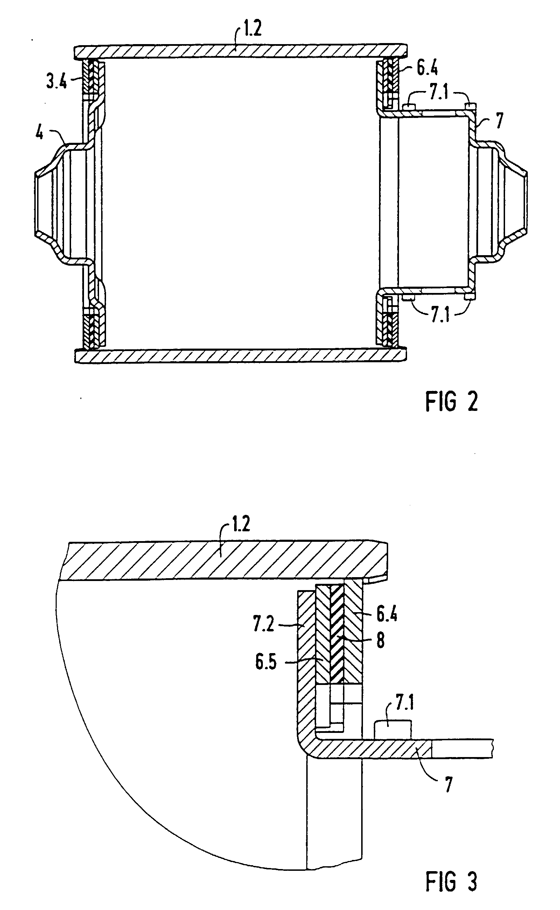

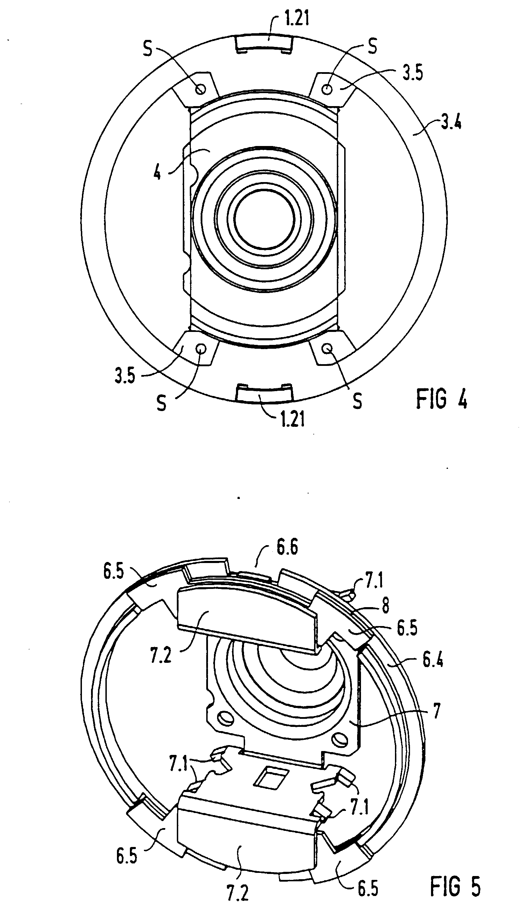

FIG 2 bis 5 zeigen eine insbesondere hinsichtlich einer fluchtenden Ausrichtung von Rotor zu Stator montagetechnisch vorteilhafte und trotzdem aufwandsarme geräuschgedämpfte Lagerung; dazu ist eine den ersten statorseitigen Lagerbügelteil 3 bzw.6 und das Gerausch-Dämpfungsteil 5 bzw.8 umfassende vorfertigbare, aus einfachen Einzelheiten zusammenfügbare Bauteileinheit derart vorgesehen, daß das Geräusch-Dämpfungsteil 5 bzw.8 axial an seiner einen Stirnseite mit einem ersten, vorzugsweise sich über den gesamten Umfang des Motorgehäuses 1.2 erstreckenden ringplattenförmigen Halteteil 6.4 bzw.3.4 und an seiner anderen Stirnseite mit zweiten, vorzugsweise sich nur im Bereich des zweiten lagerseitigen Lagerbügelteils 4 bzw.7 erstreckenden, teilringplattenförmigen Halteteilen 3.5 bzw.6.5 verbunden ist. Die Verbindung erfolgt vorzugsweise durch Ankleben bzw. Anvulkanisieren der insbesondere aus Metall bestehenden Halteteile. Der erste Halteteil 3.4 bzw.6.4 ist am Stator 1, insbesondere am Motorgehäuse 1.2, z.B. durch Verstemmen einer Nase 1.21 des Motorgehäuses 1.2 in einer entsprechenden Paßnut 6.6 des ersten Halteteils 3.4 bzw.3.6, befestigt. Der zweite Halteteil 3.5 bzw.6.5 wird jeweils von einem freien Ende 7.2 des zweiten lagerseitigen Lagerbügelteils 4 bzw.7 axial hintergriffen und ist mit diesem, z.B. durch Verschweißen, fest verbunden; zum einfachen axialen Zuführen des Verschweißwerkzeuges sind die zweiten Halteteile 3.5 bzw.6.5 derart freiliegend gegenüber dem ersten Halteteil 3.4 bzw.6.4 bzw. den freien Enden 7.2 des zweiten lagerseitigen Lagerbügelteils 4 bzw.7 ausgebildet, daß die Schweißpunkte S - wie insbes. aus Fig. 4 ersichtlich - axial frei zugänglich sind.

Durch die axial hintergreifende Anlage des zweiten lagerseitigen Lagerschildteils 4 bzw.7 hinter dem zweiten Halteteil 3.5 bzw.6.5 ist sichergestellt, daß bei dem bestehenden axialen Anstelldruck das Geräusch-Dämpfungsteil 5 bzw.8 nur auf Druck, d.h. nicht auf Zug, belastet ist.

Ein Kalibrieren, d.h. toleranzausgleichendes Fluchten zwischen Rotor und Stator, erfolgt auf einfache Weise in einer entsprechenden Vorrichtung beim Verbinden, insbesondere Schweißen, zwischen dem zweiten lagerseitigen Halteteil 3.5 bzw.6.5 der Bauteileinheit 6.4;8;6.5 bzw.3.4;5;3.5 einerseits und den hintergreifenden freien Enden 7.2;7.2 des zweiten lagerseitigen Lagerbügelteils 4 bzw.7 andererseits.

Zur Befestigung des Geräusch-Dämpfungsteils 5 bzw.8 an den beidseitig anliegenden Lagerbügelteilen 3;6 bzw.4;7 sind nach Ausgestaltungen der Erfindung insbesondere eine Klebe- bzw. eine Einknöpf- oder Rastverbindung vorgesehen. Weitere bevorzugte Befestigungsarten sind im Falle einer Metallausführung der Lagerbügelteile ein Anvulkanisieren und im Fall einer Kunststoffausführung der Lagerbügelteile ein Anspritzen des Geräusch-Dämpfungsteils oder ein Anlösen und dadurch anschließendes Verkleben des Lagerbügelteils mit dem Geräusch-Dämpfungsteil.

Zur gleichzeitigen wirkungsvollen Abdampfung von durch Bürsten B1;B2 entstehenden Geräuschen ist vorgesehen, die Bürsten B1;B2, die zur deutlicheren Darstellung der erfindungsgemäßen Lagerbügelausführung in FIG 1-5 weggelassen wurden und nur in der axialen Draufsicht auf den kommutatorseitigen Lagerbügel 6;7 in FIG 4 dargestellt sind, im lagerseitigen Lagerbügelteil 7 gehalten, insbesondere als Hammerbürstenhalter, schwenkbar gelagert. Die schwenkbare Lagerung erfolgt nach Art einer Schneidenlagerung in einem dazu im wesentlichen axial verlaufenden Abschnitt des lagerseitigen zweiten Lagerbügelteils 7 zwischen axialen Anschlägen 7.1.

## Patentansprüche

1. Geräuscharmer Kommutatormotor mit zumindest einem Lagerbügel (3;4 bzw.6;7) oder dergleichen zwischen einem Stator einerseits und einem Lager, insbesondere einem Kalottenlager (9 bzw.10), für einen Rotor andererseits sowie mit einer Aufnahme für den Kommutator beschleifende Bürsten (B1;B2), wobei der Lagerbügel (3;4 bzw.6;7) zumindest in einen ersten statorseitigen Lagerbügelteil (3 bzw.6) und in einen zweiten lagerseitigen, gleichzeitig der Aufnahme der Bürsten (B1;B2) dienenden Lagerbügelteil (4 bzw.7) geteilt ist, der den ersten Lagerbügelteil (3 bzw.6) axial hintergreift und mit diesem über ein anliegendes zwischenliegendes Geräusch-Dämpfungsteil (5 bzw.8) verbunden ist.

2. Geräuscharmer Kommutatormotor nach dem vorhergehenden Anspruch, wobei der erste statorseitige Lagerbügelteil (3 bzw.6) und das Geräusch-Dämpfungsteil (5 bzw.8) zusammengefaßt sind zu einer vorfertigbaren Bauteileinheit (6.4;6.5 bzw.3.4; 8;5;3.5) mit einem ersten am Stator (1), insbesondere an dessen Motorgehäuse 1.2, befestigbaren Halteteil (3.4 bzw.6.4) und einem axial beabstandeten, über das zwischenliegende Geräusch-Dämpfungsteil (5 bzw.8) verbundenen, am zweiten statorseitigen Lagerbügelteil befestigbaren zweiten Halteteil (6.5 bzw.3.5).

3. Geräuscharmer Kommutatormotor nach dem vorhergehenden Anspruch mit einem sich über den Umfang des Motorgehäuses (1.2) erstreckenden, insbesondere ringplattenförmigen, ersten Halteteil (6.4 bzw.3.4).

4. Geräuscharmer Kommutatormotor nach zumindest einem der vorhergehenden Ansprüche 2 bzw. 3 mit einem sich im wesentlichen nur im Befestigungs- bzw. Anlagebereich des zweiten lagerseitigen Lagerbügelteils (4 bzw.7) erstreckenden, insbesondere teilringplattenförmigen, zweiten Halteteil (3.4 bzw.6.4).

5. Geräuscharmer Kommutatormotor nach zumindest einem der vorhergehenden Ansprüche 2-4 mit einer Schweißverbindung zwischen dem zweiten Halteteil (3.5 bzw.6.5) und dem zweiten lagerseitigen Lagerbügelteil (4 bzw.7), insbesondere mittels eines axial stirnseitig an einen entsprechend freien Bereich des zweiten Hallteteils ansetzbaren Schweißwerkzeuges.

6. Geräuscharmer Kommutatormotor nach zumindest einem der vorhergehenden Ansprüche 2-4 mit einer Einknöpf- bzw. Rastverbindung zwischen dem ersten statorseitigen Lagerbügelteil (3 bzw.6) bzw. dem zweiten lagerseitigen Lagerbügelteil (4 bzw.7) und dem Geräusch-Dämpfungsteil (5 bzw.8).

7. Geräuscharmer Kommutatormotor nach zumindest einem der vorhergehenden Ansprüche mit einer Klebeverbindung oder Vulkanisierverbindung zwischen dem ersten statorseitigen Lagerbügelteil (3 bzw.6) bzw. dem zweiten lagerseitigen Lagerbügelteil (4 bzw.7) und dem Geräusch-Dämpfungsteil (5 bzw.8).

8. Geräuscharmer Kommutatormotor nach zumindest einem der vorhergehenden Ansprüche mit Geräusch-Dämpfungsteilen (5 bzw.8) aus einem Elastomer, insbesondere einem Naturkautschuk, einem Silikon oder einem Etylenpolymer.

## Claims

1. Low-noise commutator motor having at least one bearing (3; 4 and 6; 7) or the like between a stator on the one hand and a bearing, in particular a slottedlink bearing (9 and 10) for a rotor on the other hand, as well as having a holder for brushes (B1; B2) which slide on the commutator, the bearing bracket (3; 4 or 6; 7) being split at least into a first bearing bracket part (3 or 6) on the stator side and into a second bearing bracket part (4 or 7) on the bearing side, which is at the same time used to hold the brushes (B1; B2), engages axially behind the first bearing bracket part (3 or 6) and is connected thereto via an intermediate noise-damping part (5 or 8) which rests on it.

2. Low-noise commutator motor according to the preceding claim, in which the first bearing bracket part (3 or 6) on the stator side and the noise-damping part (5 or 8) are combined to form a component unit (6.4; 6.5 or 3.4; 8; 5; 3.5) which can be prefabricated and has a first holding part (3.4 or 6.4) which can be attached to the stator (1), in particular to its motor housing (1.2), and has a second holding part (6.5 or 3.5) which is at an axial distance away, is connected via the intermediate noise-damping part (5 or 8) and can be attached to the second bearing bracket part on the stator side.

3. Low-noise commutator motor according to the preceding claim having a first holding part (6.4 or 3.4) which extends over the circumference of the motor housing (1.2) and is, in particular, in the form of an annular plate.

4. Low-noise commutator motor according to at least one of the preceding claims 2 or 3 having a second holding part (3.4 or 6.4) which extends essentially only in the attachment or contact region of the second bearing bracket part (4 or 7) on the bearing side and, in particular, is in the form of a partial annular plate.

5. Low-noise commutator motor according to at least one of the preceding claims 2-4 having a welded joint between the second holding part (3.5 or 6.5) and the second bearing bracket part (4 or 7) on the bearing side, in particular by means of a welding tool which can be placed axially at the end against a correspondingly free region of the second holding part.

6. Low-noise commutator motor according to at least one of the preceding Claims 2-4 having a buttoned or latched joint between the first bearing bracket part (3 or 6) on the stator side as well as the second bearing bracket part (4 or 7) on the bearing side, and the noise-damping part (5 or 8).

7. Low-noise commutator motor according to at least one of the preceding claims having a bonded joint or vulcanised joint between the first bearing bracket part (3 or 6) on the stator side as well as the second bearing bracket part (4 or 7) on the bearing side and the noise-damping part (5 or 8).

8. Low-noise commutator motor according to at least one of the preceding claims having noise-damping parts (5 or 8) composed of an elastomer, in particular of a natural rubber, a silicone or an ethylene polymer.

## Revendications

1. Moteur silencieux à collecteur, comportant au moins un étrier (3; 4 ou 6 ; 7) de montage ou analogue entre un stator d'une part et un palier pour un rotor d'autre part, notamment un palier (2.1 ou 2.2) à calotte, et comportant un logement pour des balais (B1, B2) frottant sur le collecteur, l'étrier (3 ; 4 ou 6; 7) de montage étant divisé en une première partie (3 ou 6) d'étrier, côté stator, et une deuxième partie (4 ou 7) d'étrier, côté palier, servant en même temps à loger les balais (B1, B2), s'accroche axialement derrière la première partie (3 ou 6) d'étrier et lui est assemblée au moyen d'un élément (5 ou 8) insonorisant appliqué entre les deux parties.

2. Moteur silencieux à collecteur suivant la revendication précédente, la première partie (3 ou 6) d'étrier, côté stator et l'élément (5 ou 8) insonorisant étant réunis en une unité (3.4, 5, 3.5 ou 6.4, 8, 6.5) de construction pouvant être préfabriquée, comportant une première partie (3.4 ou 6.4) de fixation, pouvant être fixée sur le stator (1), notamment sur sa carcasse (1.2) de moteur, et une deuxième partie (3.5 ou 6.5) de fixation, axialement distante, pouvant être fixée sur la deuxième partie d'étrier côté palier et assemblée à la première partie de fixation au moyen de l'élément (5 ou 8) insonorisant intercalé.

3. Moteur silencieux à collecteur suivant la revendication précédente, comportant une première partie (3.4 ou 6.4) de fixation s'étendant sur la circonférence de la carcasse (1.2) de moteur, notamment en forme de plaque en anneau.

4. Moteur silencieux à collecteur suivant au moins l'une des revendications précédentes 2 ou 3, comportant une deuxième partie (3.5 ou 6.5) de fixation ne s'étendant essentiellement que dans la région de fixation ou encore d'application de la deuxième partie (4 ou 7) d'étrier côté palier, notamment en forme de plaque en anneau partiel.

5. Moteur silencieux à collecteur suivant au moins l'une des revendications précédentes 2 à 4, comportant un joint soudé entre la deuxième partie (3.5 ou 6.5) de fixation et la deuxième partie (4 ou 7) d'étrier côté palier, notamment au moyen d'un outil de soudage pouvant être appliqué axialement du côté frontal sur une région libre correspondante de la deuxième partie de fixation.

6. Moteur silencieux à collecteur suivant au moins l'une des revendications précédentes 2 à 4, comportant un assemblage par agrafage ou encliquetage entre la première partie (3 ou 6) d'étrier, côté stator ou, respectivement, la deuxième partie (4 ou 7) d'étrier, côté palier et l'élément (5 ou 8) insonorisant.

7. Moteur silencieux à collecteur suivant au moins l'une des revendications précédentes, comportant un joint collé ou vulcanisé entre la première partie (3 ou 6) d'étrier, côté stator ou, respectivement, la deuxième partie (4 ou 7) d'étrier, côté palier et l'élément (5 ou 8) insonorisant.

8. Moteur silencieux à collecteur suivant au moins l'une des revendications précédentes, comportant des éléments (5 ou 8) insonorisants en élastomère, notamment en caoutchouc naturel, en silicone ou en polymère d'éthylène.
